**Europäisches Patentamt**

**European Patent Office**

**Office européen des brevets**

(19)

(11) Numéro de publication: **0 060 169**

**A1**

(12) # DEMANDE DE BREVET EUROPEEN

(21) Numéro de dépôt: **82400299.2**

(22) Date de dépôt: **19.02.82**

(51) Int. Cl.³: **F 17 C 3/08**
**F 17 C 13/00**

(30) Priorité: **20.02.81 FR 8103447**

(43) Date de publication de la demande:
**15.09.82 Bulletin 82/37**

(84) Etats contractants désignés:
**DE GB NL**

(71) Demandeur: **TECHNIGAZ**
**2, rue de la Bresle**
**F-78310 Maurepas(FR)**

(72) Inventeur: **Argy, Gilles**
**15 ter, rue Nationale**
**F-78940 La Queue les Yvelynes(FR)**

(74) Mandataire: **Weinstein, Zinovi et al,**
**Cabinet Z. WEINSTEIN 20, Avenue de Friedland**
**F-75008 Paris(FR)**

(54) **Réservoir de stockage de gaz cryogéniques liquéfiés tels que, notamment, de l'hydrogène.**

(57) La présente invention concerne un réservoir de stockage pour gaz cryogéniques liquéfiés.

Le réservoir selon l'invention comprend une enveloppe externe (1), une enveloppe interne (2) étanche délimitant l'espace de stockage (3) contenant le gaz liquéfié et une structure isolante (4) montée dans l'espace inter-enveloppe et mis sous vide. Il est caractérisé en ce que la structure isolante comprend une paroi (5) de panneaux juxtaposés, qui sont creux et vidés, et en ce que les joints entre panneaux adjacents (6) sont recouverts de façon étanche par des éléments (7) susceptibles d'absorber la contraction de la paroi sous l'effet du froid, ces éléments et la paroi interne desdits panneaux juxtaposés formant ladite enveloppe interne (2).

L'invention est utilisable pour le stockage de l'hydrogène liquéfié

FIG.1

EP 0 060 169 A1

Croydon Printing Company Ltd.

-1-

"Réservoir de stockage de gaz cryogéniques liquéfiés tels que notamment de l'hydrogène".-

La présente invention a essentiellement pour objet un réservoir de stockage pour gaz liquéfiés à basse température, tels que notamment de l'hydrogène liquéfié, du type comprenant une enveloppe externe, une enveloppe interne étanche délimitant l'espace de stockage du gaz liquéfié et une structure isolante montée dans l'espace inter-enveloppe et mis sous vide.

On sait combien il serait avantageux de pouvoir disposer de réservoirs capables de stocker une grande quantité de gaz liquéfié notamment de l'hydrogène liquéfié. En effet, la production de l'hydrogène liquéfié par voie électrolyse à partir de l'eau et son stockage à l'état liquéfié en grande quantité représenterait une solution avantageuse du problème de stockage, sous forme chimique, de l'excédent d'énergie électrique produite dans des centres électro-nucléaires aux heures creuses, l'énergie qui sans possibilité de stockage serait perdue. Or, par exemple, la production par jour d'énergie d'un centre électro-nucléaire comportant trois centrales de 1300 mW aux heures creuses pourrait atteindre 8000 m³ d'hydrogène liquéfié. De plus, pour qu'un stockage d'énergie électrique sous forme chimique soit réellement envisageable, il faudrait pouvoir stocker une quantité d'hydrogène liquéfié correspondant à plusieurs jours de production, soit une capacité de plusieurs dizaines de milliers de mètres cubes.

Les réservoirs connus du type énoncé plus haut ne permettent pas d'atteindre des volumes de stockage de cet ordre. Pour des réservoirs isolés sous vide, le volume est limité par la tenue mécanique des enceintes vidées. De plus, une perte d'étanchéité de l'enceinte sous vide entraînerait une augmentation très brutale du taux d'évaporation et un risque non nul de rupture des réservoirs.

La présente invention a pour but de proposer un réservoir du type énoncé plus haut qui peut avoir une capacité de stockage très élevée et qui, de ce fait, peut être utilisé par exemple pour le stockage d'énergie en excès produite dans un centre électro-nucléaire.

Pour atteindre ce but, le réservoir selon l'invention est caractérisé en ce que la structure isolante comprend une paroi de panneaux juxtaposés, qui sont creux et vidés et en ce que les joints entre panneaux adjacents sont recouverts de façon étanche par des éléments susceptibles d'absorber la contraction sous l'effet du froid, de la paroi, ces éléments et la surface interne de la paroi formant ladite enveloppe étanche interne.

Selon une caractéristique avantageuse de l'invention, l'espace autour des joints, recouvert de façon étanche par les éléments d'absorption de contraction thermique, est rempli d'un gaz inerte ayant un point de liquéfaction inférieure à celui du gaz stocké.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 représente une vue en coupe axiale du principe de la structure d'un réservoir selon l'invention, rempli d'un gaz liquéfié.

La figure 2 montre en une vue en coupe la zone de la jonction de deux panneaux juxtaposés conforme à l'invention.

La figure 3 est une vue éclatée en coupe et illustre les moyens de fixation d'un panneau selon l'invention sur son support; et

La figure 4 est une vue selon la direction IV-IV de la figure 3.

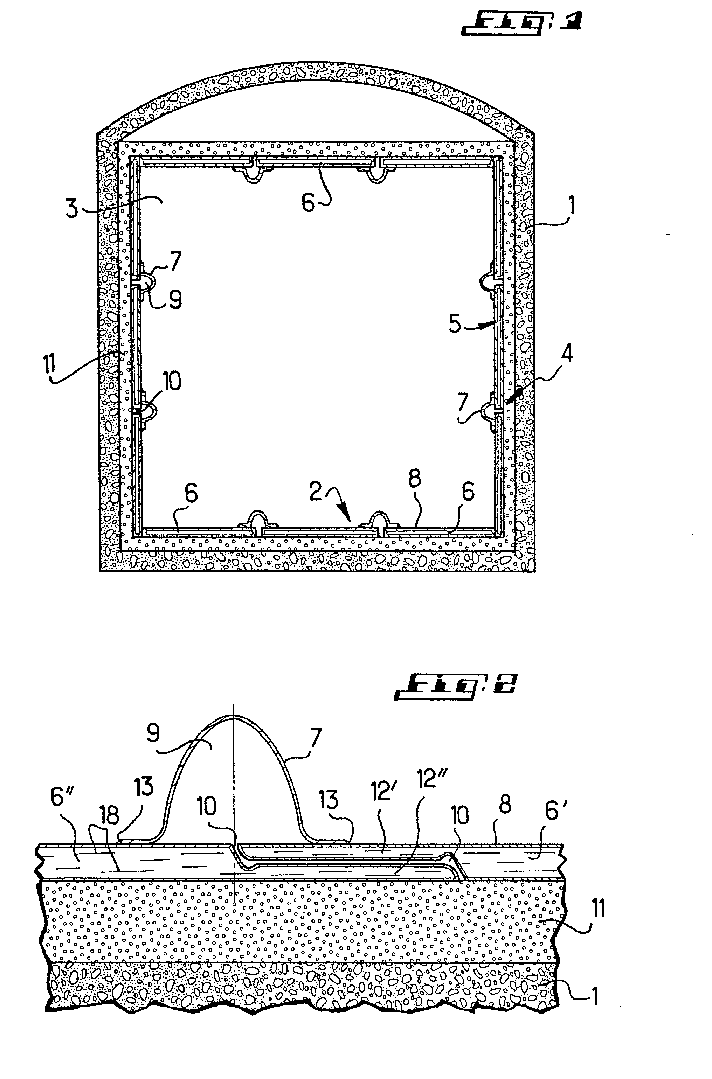

La figure 1 montre de façon schématique un réservoir de forme cylindrique pour le stockage d'un gaz liquéfié à très basse température, notamment de l'hydrogène liquéfié, une température d'environ 20°K, c'est-à-dire -253°C. Ce réservoir comprend une enveloppe externe auto-porteuse 1, une enveloppe interne 2 délimitant l'espace de stockage 3 rempli de gaz liquéfié et une structure isolante 4 montée dans l'espace inter-enveloppe.

Conformément à l'invention, la structure isolante 4 comporte une paroi interne 5 formée par des panneaux juxtaposés 6 qui sont creux et vidés et réalisés par exemple en acier inoxydable. Les joints entre deux panneaux 6 voisins sont recouverts de façon étanche par un réseau rectangulaire d'ondes 7 de dilatation, et de croisement d'ondes, connus en soi. Les ondes 7 sont fixées à la surface interne 8 des panneaux 6 par exemple par soudage. Ce réseau d'ondes 7 et la paroi interne 8 des panneaux constituent l'enveloppe interne étanche 2 délimitant l'espace 3 de stockage du gaz liquéfié. Le réseau d'ondes 7 tout en assurant l'étanchéité de l'enveloppe interne 2 permet la contraction de cette enveloppe froide sans engendrer des efforts thermiques trop importants.

L'espace 9 au niveau des joints 10 des panneaux 6 juxtaposés et surplombés de façon étanche par les ondes 7 est rempli d'un gaz inerte ayant un point de liquéfaction inférieur à celui du gaz stocké. Si le gaz liquéfié est de l'hydrogène, ce gaz inerte pourrait être de l'hélium.

La structure isolante 4 comprend en outre une couche isolante externe 11 en un matériau cellulaire, par exemple en mousse de polyuréthane qui permet de limiter jusqu'à la réparation le flux thermique qui pourrait apparaître si le vide d'un panneau 6 se détériorait.

Des calculs thermiques permettent de montrer que dans une telle structure isolante comprenant une paroi 5 formée de panneaux juxtaposés 6, le transfert de chaleur est régi par le jointage des panneaux, ce transfert se faisant le long des bords des panneaux vidés. Pour que l'effet de la paroi constituée par les panneaux juxtaposés soit optimal, il s'était avéré avantageux d'augmenter les dimensions des panneaux vidés pour diminuer les longueurs des côtés, tout en conservant des dimensions compatibles avec une manutention aisée, et d'augmenter l'impédance thermique des ponts thermiques constitués par les joints 10, par un élargissement des joints et par une diminution de leur épaisseur.

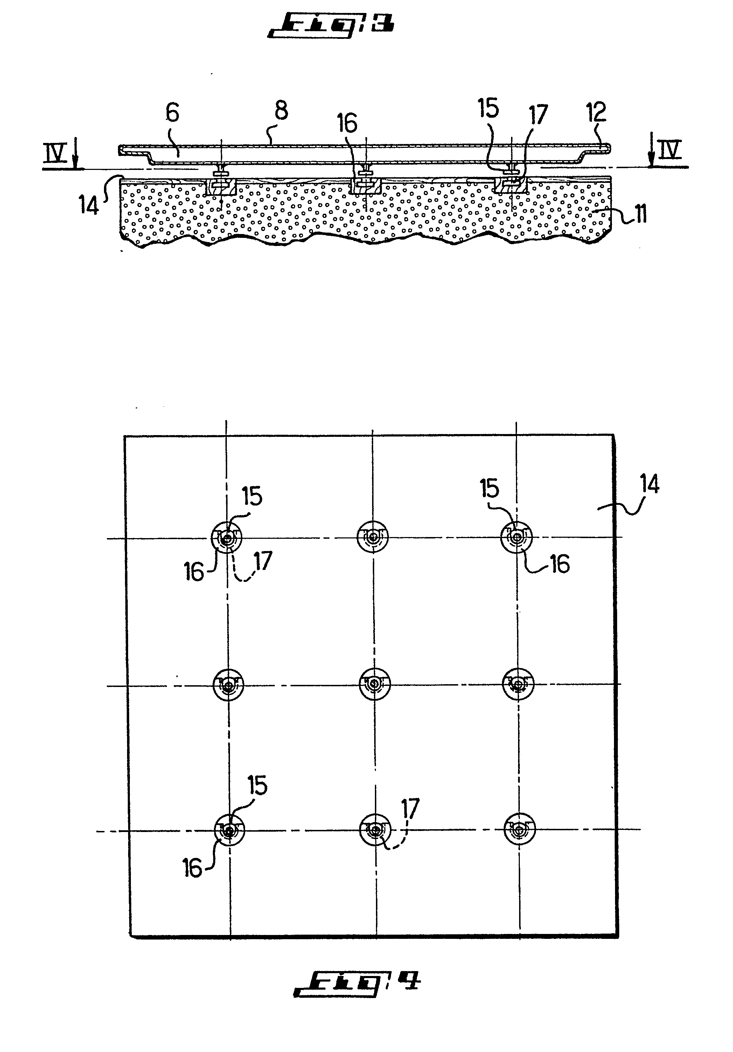

La configuration des panneaux et leur disposition, représentées sur la figure 2 constituent une réponse avantageuse à ce problème. Cette figure montre deux panneaux 6', 6" juxtaposés. Chaque panneau comprend un rebord périphérique 12', 12" faisant latéralement saillie dans le plan du panneau soit en prolongeant la surface radialement interne 8, comme dans le cas du panneau 6', soit en prolongeant la surface radialement externe, comme dans le cas du panneau 6". Ces rebords latéraux présentent une épaisseur approximativement constante inférieure à la moitié de l'épaisseur du panneau. Pour la formation de la paroi 2, les deux panneaux 6' et 6" sont juxtaposés de façon que leurs rebords 12' et 12" se recouvrent mutuellement de la façon illustrée en laissant subsister entre elles un espace de joint 10 relativement large mais étroit. Cette configuration des panneaux 6 au niveau de leurs bords permet une limitation de l'épaisseur des panneaux et assure une élasticité des bords lors de la contraction différentielle entre les faces d'un panneau. L'onde 7 est reliée par soudage en 13 à la surface interne 8 des panneaux de façon symétrique au-dessus du joint.

La figure 2 montre également que des éléments 18 formant super-isolants peuvent être prévus à l'intérieur des panneaux 6. Ce super-isolant peut être défini comme ayant une conductivité thermique inférieure à

$5 \times 10^{-3}$mW/cm/°K et de préférence de l'ordre de $3 \times 10^{-3}$mW/cm/°K. Le meilleur super-isolant actuellement connu possède une conductivité thermique d'environ $10^{-4}$mW/cm/°K pour l'hydrogène liquéfié. Ce super-isolant est connu sous la dénomination commerciale Mylar. Il s'agit des feuilles aluminisées isolantes d'un côté et réflectrices de l'autre. Comme super-isolant on pourrait également utiliser des billes en polystyrène métallisées (Ag.Al).

Les figures 3 et 4 montrent la façon de laquelle un panneau 6 est fixé sur la couche isolante externe 11. On constate tout d'abord l'interposition entre les panneaux 6 et la couche 11 d'une plaque intermédiaire de support 14 fixée sur la surface radialement interne de la couche 11.

Pour la fixation des panneaux 6 à cette structure de support formée par la plaque 14 et la couche 11, chaque panneau 6 porte sur sa surface radialement externe, c'est-à-dire en regard de la plaque 14, un certain nombre de pieds de support à base élargie 15. A chaque pied de support est associé un contre-organe 16 de forme complémentaire au pied de support. Ce contre-organe 16 est formé par un bloc par exemple en bois, de forme cylindrique, monté fixe dans la plaque 14 et dans la couche isolante 11. Dans chaque bloc est usiné un évidement 17 partiellement fermé formant glissière et permettant l'engagement du pied de support à base élargie et son déplacement le long de la partie formant glissière dans une position dans laquelle la base élargie du pied de support est ancrée et suspendue à la plaque 14.

On donnera ci-après à titre d'exemple les dimensions les plus importantes d'une structure isolante dans un

0060169

Fig. 1

Fig. 2

Fig. 3

Fig. 4

Office européen
des brevets

## RAPPORT DE RECHERCHE EUROPEENNE

EP   82  40  0299

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | US-A-3 302 358  (R.G. JACKSON) * figures 1-3,7,7A; colonne 1, lignes 10-12, 28-49; colonne 2, lignes 2-35; colonne 2, ligne 64 - colonne 3, ligne 13; colonne 3, ligne 53 - colonne 4, ligne 32; colonne 4, lignes 58-68; colonne 5, lignes 27-75 * | 1,2,5 | F 17 C   3/08 F 17 C   13/00 |
| Y | FR-A-1 478 254  (CONCH) * page 1, colonne 1, lignes 1-3; colonne 1, ligne 19 - colonne 2, ligne 30; page 2, colonne 1, lignes 1-50; page 2, colonne 2, ligne 5 - page 3, colonne 1, ligne 42; figures 1-3 * | 1,2,5 | |
| Y | US-A-3 379 330  (P.J. PERKINS, Jr.) *  extrait; colonne 1, lignes 26-30; colonne 1, ligne 63 - colonne 2, ligne 19; colonne 2, ligne 37 - colonne 4, ligne 3; figures 1-4 * | 1,6 | DOMAINES TECHNIQUES RECHERCHES (Int. Cl. 3) |
| Y | DE-A-2 615 299 (ERNO-RAUMFAHRT-TECHNIK) *  page 3, alina 1; page 5, alina 2; page 5, dernier alina - page 6, fin de page; figures 1,4 * | 1 | F 17 C |
| A | FR-A-1 586 392  (TECHNIGAZ) | | |

Le présent rapport de recherche a été établi pour toutes les revendications

| Lieu de la recherche LA HAYE | Date d'achèvement de la recherche 27-05-1982 | Examinateur SIEM T.D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82